(19) Europäisches Patentamt
European Patent Office
Office européen des brevets

(11) EP 3 916 471 B1

(12) **EUROPEAN PATENT SPECIFICATION**

(45) Date of publication and mention of the grant of the patent:
**12.11.2025 Bulletin 2025/46**

(21) Application number: **20766235.4**

(22) Date of filing: **20.02.2020**

(51) International Patent Classification (IPC):
***G02C 7/02*** *(2006.01)* ***C08G 18/38*** *(2006.01)*
***C08G 18/76*** *(2006.01)* ***G02B 1/14*** *(2015.01)*
***C08G 18/20*** *(2006.01)* ***C08G 18/80*** *(2006.01)*
***C08K 5/3475*** *(2006.01)* ***G02B 5/20*** *(2006.01)*
***G02B 5/22*** *(2006.01)* ***G02C 7/10*** *(2006.01)*

(52) Cooperative Patent Classification (CPC):
(C-Sets available)
**C08G 18/7642; C08G 18/2018; C08G 18/3876; C08G 18/8054; C08K 5/3475; G02B 5/208; G02B 5/223;** G02C 7/104 (Cont.)

(86) International application number:
**PCT/JP2020/006879**

(87) International publication number:
**WO 2020/179482 (10.09.2020 Gazette 2020/37)**

(54) **PLASTIC LENS AND EYE GLASSES**

KUNSTSTOFFLINSEN UND BRILLE

LENTILLE EN PLASTIQUE ET LUNETTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2019 JP 2019038720**

(43) Date of publication of application:
**01.12.2021 Bulletin 2021/48**

(73) Proprietor: **Tokai Optical Co., Ltd.**
**Okazaki-shi, Aichi 444-2192 (JP)**

(72) Inventor: **UENO, Hiroshi**
**Aichi 444-2192 (JP)**

(74) Representative: **Prüfer & Partner mbB**
**Patentanwälte · Rechtsanwälte**
**Sohnckestraße 12**
**81479 München (DE)**

(56) References cited:
**EP-A1- 3 351 593**
**WO-A1-2016/125736**
**WO-A1-2018/178112**
**WO-A1-2019/022131**
**CN-A- 108 084 385**
**CN-A- 108 084 385**
**US-A1- 2003 176 542**
**US-A1- 2018 340 044**
**US-A1- 2019 047 967**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/3475, C08L 81/00;**
**G02B 1/041, C08L 75/04, C08L 81/00, C08L 2666/70;**
**G02B 1/041, C08L 75/04, C08L 81/00, C08L 2666/70, C08K 5/0041**

## Description

### TECHNICAL FIELD

The present invention relates to a plastic lens that reduces (cuts) transmission of ultraviolet rays and light (blue light) on the short wavelength side of a visible range, and eye glasses (spectacles) using the plastic lens.

### BACKGROUND ART

As a plastic lens to which 2-(4-butoxy-2-hydroxyphenyl)-2H-benzotriazole is added as an ultraviolet absorber, a plastic lens described in Japanese Laid-Open Patent Publication No. 2015-34990 (paragraph [0112]) is known.

In this plastic lens, ultraviolet rays in a wavelength range of less than 400 nm (nanometer) are cut.
Furthermore, document US 2018/340044 A1 discloses a polymerizable composition for an optical material which includes an episulfide compound, an organic coloring matter, an UV absorber and a polymerization catalyst, wherein the organic coloring matter has a main absorption peak between 565 nm and 605 nm in a visible light absorption spectrum.
Document EP 3 351 593 A1 discloses a method of manufacturing a polymerizable composition for an optical material, including a step of mixing an iso(thio)cyanate compound and an organic coloring matter, so as to obtain a mixed solution a, a step of mixing the mixed solution a, an ultraviolet absorbing agent, and an iso(thio)cyanate compound which is identical to or different from the iso(thio)cyanate compound, so as to obtain a mixed solution b, and a step of mixing a mixed solution b and an active hydrogen compound.
In addition, document CN 1 108 084 385 A discloses superhigh tenacity anti-blue light resin lens and a preparation method thereof. The superhigh tenacity anti-blue light resin lens is prepared from polyisocyanate, a polythiol compound, a carboxylic compound, a polyphenol compound, a modifying agent, a demoulding agent and a tin catalyst as raw materials according to a mass ratio of (30-60):(2-10):(2-10):(30-60):(0.1-1):(0.01-0.1):(0.01-0.1), wherein the carboxylic compound is one or more of C2-C15 aliphatic dicarboxylic compounds, C3-C20 aliphatic tricarboxylic compounds and C6-C30 aromatic carboxylic compounds; the modifying agent is selected from 3-[3-tert-butyl-4-hydroxy-5-(5-chloro-2H-benzotriazol-2-yl)phenyl] methyl propionate and/or 3-[3-(benzotriazol-2-yl)-5-tert-butyl-4-hydroxyphenyl]propionic acid. The document does not disclose the feature of claim 1 that the polymerizable compound contains a combination of a xylene diisocyanate and a polythiol.
Additionally, document WO 2019/022131 A1 discloses a polymerizable composition for an optical material, an optical material obtained from the composition, and a use thereof.

### SUMMARY OF THE INVENTION

Recently, from the viewpoint of health of eyes, light that is on the short wavelength side of a visible range, that has high energy in the visible range, and that has a wavelength of not less than 400 nm and not greater than 420 nm (so-called HEV: High Energy Violet light), has been tried to be cut.

However, the plastic lens containing the ultraviolet absorber described above has a limit in improvement of an HEV cut rate, which is the percentage of cutting HEV, i.e., 100-(average transmittance in a wavelength range of not less than 400 nm and not greater than 420 nm) [%].

A main object of the present invention is to provide a plastic lens having a higher HEV cut rate and spectacles.

In order to attain the above object, a first aspect of the invention is a plastic lens according to claim 1.

In a second aspect of the invention based on the above invention, the xylene diisocyanate may be m-xylene diisocyanate.

In a third aspect of the invention based on the above invention, an HEV cut rate represented as 100-(average transmittance in a wavelength range of not less than 400 nm and not greater than 420 nm) may be not less than 94%.

In a reference aspect not part of the present invention, the benzotriazole compound may be a benzotriazole compound in which R in the general formula (1) is represented by an alkyl group having 8 carbon atoms, and may be at a proportion of less than 0.62 parts by weight relative to 100 parts by weight of the polymerizable compound.

In order to attain the above object, an fourth aspect of the invention is spectacles in which the plastic lens according to the above invention may be used.

A main effect of the present invention is that a plastic lens and spectacles having a higher HEV cut rate are provided.

### BRIEF DESCRIPTION OF THE DRAWINGS

FIG. 1 is a graph showing a spectral transmittance distribution in a wavelength range of not less than 390 nm and not greater than 450 nm in each of Examples 1 to 4 and Comparative Example 1.

FIG. 2 is a graph showing a spectral transmittance distribution in a wavelength range of not less than 390 nm and not greater than 450 nm in Examples 6 and Comparative Example 1.

FIG. 3 is a graph showing a spectral transmittance distribution in a wavelength range of not less than 390 nm and not greater than 450 nm in Examples 8 and 9 and Comparative Example 2.

DESCRIPTION OF EMBODIMENTS

Hereinafter, an example of an embodiment according to the present invention will be described.

The present invention is not limited to the embodiment below.

In a plastic lens according to the present invention, a xylene diisocyanate and a polythiol are used as a polymerizable compound (resin monomer) for forming a plastic lens base material.

The plastic lens base material contains a thiourethane obtained through polymerization and curing of the xylene diisocyanate and the polythiol.

The xylene diisocyanate is o-xylene diisocyanate, m-xylene diisocyanate, or p-xylene diisocyanate, or a composition that contains at least any two of these.

The polythiol is, for example, bis(mercaptomethyl)-3,6,9-trithio-1,11-undecanedithiol, and more specifically, for example, 4,8-bis(mercaptomethyl)-3,6,9-trithio-1,11-undecanedithiol, 4,7-bis(mercaptomethyl)-3,6,9-trithio-1,11-undecanedithiol, or 5,7-bis(mercaptomethyl)-3,6,9-trithio-1,11-undecanedithiol, or a composition that contains at least any two of these.

Alternatively, the polythiol is 1,2-bis(2-mercaptoethylthio)-3-mercaptopropane. It should be noted that the polythiol may be a mixture of bis(mercaptomethyl)-3,6,9-trithio-1,11-undecanedithiol and 1,2-bis(2-mercaptoethylthio)-3-mercaptopropane.

Since the plastic lens base material contains the thiourethane described above, the plastic lens base material has a high refractive index of about 1.67.

Further, the polymerizable compound forming the plastic lens base material has added thereto a benzotriazole compound represented by general formula (1) below, and the benzotriazole compound represented by general formula (1) below is mixed, as an ultraviolet absorber, to the plastic lens base material.

In general formula (1), R represents an alkyl group having not less than 1 and not more than 8 carbon atoms.

The ultraviolet absorber has introduced therein a substituent containing a propionate ester and a chlorine substituent.

In particular, when the number of carbon atoms in R is 1, the ultraviolet absorber is a benzotriazole compound represented by formula (1-1) below, i.e., methyl=3-[3-t-butyl-5-(5-chloro-2H-benzotriazol-2-yl)-4-hydroxyphenyl]propionate.

When the number of carbon atoms in R is 8, the ultraviolet absorber is a benzotriazole compound represented by formula (1-2) below, i.e., octyl=3-[3-t-butyl-5-(5-chloro-2H-benzotriazol-2-yl)-4-hydroxyphenyl]propionate.

[Chem. 1]

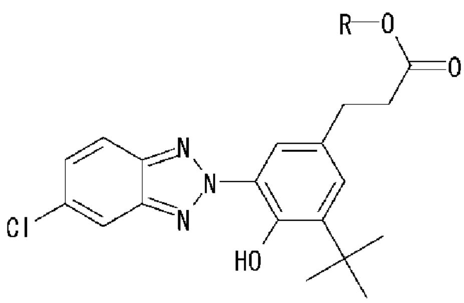

(1)

[Chem. 2]

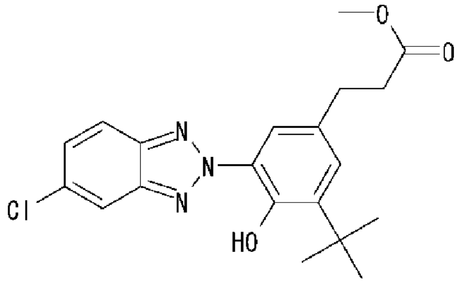

(1-1)

[Chem. 3]

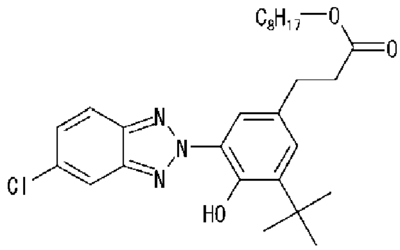

(1-2)

Such an ultraviolet absorber is mixed, before the plastic lens base material is cured, to a polymerizable composition containing the resin monomers described above and becomes a part of the plastic lens base material due to curing of the polymerizable composition.

In the plastic lens base material, in order to increase the HEV cut rate described above, the addition amount of the ultraviolet absorber needs to be increased. Meanwhile, with respect to the polymerizable composition containing the resin monomers described above, the amount (concentration) at the time of precipitation in the polymerizable composition of the ultraviolet absorber, which is a benzotriazole compound represented by general formula (1), is high. Consequently,_the benzotriazole compound does not precipitate even when a large amount, compared with another type of ultraviolet absorber, is added. Therefore, the HEV cut rate of the plastic lens base material is sufficiently increased, by the addition of the ultraviolet absorber, which is the benzotriazole compound represented by general formula (1).

The thickness of the plastic lens base material is not limited in particular. However, when the thickness is increased, the internal transmittance is proportionally decreased, and the appearance and weight as a plastic lens (in particular, a plastic spectacle lens) is comparatively worsened. Therefore, the thickness of the plastic lens base material is preferably not greater than 4 mm (millimeter).

One or more of various types of films may be formed on one side or both sides of the plastic lens base material. For example, at least one of an optical multilayer film such as an antireflection film and a hard coating film may be formed, or a primer film may be formed between a hard coating film and the plastic lens base material. As a film on the most front surface side, an antifouling film (water repellent film/oil repellent film) may be formed. Whether or not a film is added, or which type of a film is added, may be varied between the sides of the plastic lens base material.

Spectacles having a sufficiently high HEV cut rate are produced by using the above plastic lens as a plastic spectacle lens.

Next, Examples 1 to 4, 8 and 9 of the present invention, Reference Examples 5 to 7 not part of the present invention and Comparative Examples 1, 2 not belonging to the present invention are described with reference to the drawings as appropriate. It should be noted that the present invention is not limited to the Examples below. Furthermore, according to the interpretation of the present invention, Examples may be regarded as Comparative Examples, and Comparative Examples may be regarded as Examples.

As Example 1, 0.15 parts by weight of methyl=3-[3-t-butyl-5-(5-chloro-2H-benzotriazol-2-yl)-4-hydroxyphenyl] propionate (see formula (1-1) above, Eversorb88 manufactured by EverLight Chemical Industrial Corporation, hereinafter, this may be referred to as "u1"), 0.007 parts by weight of dibutyltin dichloride, and 0.085 parts by weight of an internal mold release agent were blended with a total of 100 parts by weight composed of 50.4 parts by weight of m-xylene diisocyanate (see formula (2) below, MR-10A manufactured by Mitsui Chemicals, Inc., hereinafter, this may be referred to as "a1"), and 49.6 parts by weight of a polythiol composition (MR-10B manufactured by Mitsui Chemicals, Inc., hereinafter,

this may be referred to as "b1") of which the main components were 4,8-bis(mercaptomethyl)-3,6,9-trithio-1,11-undecanedithiol (see formula (3-1) below), 4,7-bis(mercaptomethyl)-3,6,9-trithio-1,11-undecanedithiol (see formula (3-2) below), and 5,7-bis(mercaptomethyl)-3,6,9-trithio-1,11-undecanedithiol (see formula (3-3) below). The resultant mixture was stirred to be dissolved. This liquid preparation was subjected to degassing and stirring under 10 mmHg for 60 minutes, and then, was poured into a plano lens glass mold having a center thickness of 2 mm. The glass mold was subjected to curing for 18 hours while the temperature was increased from 15°C to 140°C, and then, was cooled to room temperature, whereby a plano lens having a thickness of 2 mm was produced.

[Chem. 4]

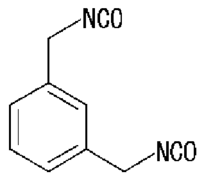

(2)

[Chem. 5]

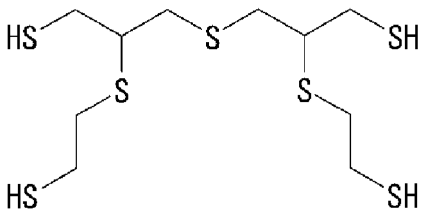

(3-1)

[Chem. 6]

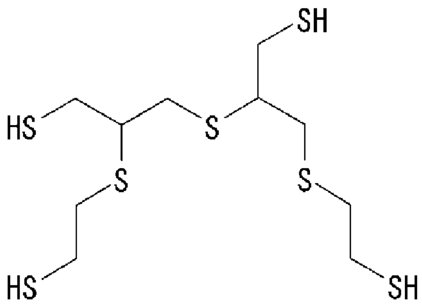

(3-2)

[Chem. 7]

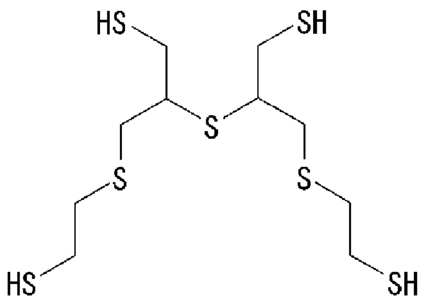

(3-3)

As Example 2, a plano lens having a thickness of 2 mm was produced by the same method as that in Example 1, except that the amount of u1 in Example 1 was changed to 0.50 parts by weight (0.50% by weight relative to the total weight

of the polymerizable composition part).

As Example 3, a plano lens having a thickness of 2 mm was produced by the same method as that in Example 1, except that the amount of u1 in Example 1 was changed to 1.10 parts by weight (1.10% by weight relative to the total weight of the polymerizable composition part).

As Example 4, a plano lens having a thickness of 2 mm was produced by the same method as that in Example 1, except that the amount of u1 in Example 1 was changed to 1.30 parts by weight (1.30% by weight relative to the total weight of the polymerizable composition part).

As Reference Example 5, a plano lens having a thickness of 2 mm was produced by the same method as that in Example 1, except that the amount of u1 in Example 1 was changed to 1.50 parts by weight (1.50% by weight relative to the total weight of the polymerizable composition part).

As Reference Example 6, a plano lens having a thickness of 2 mm was produced by the same method as that in Example 1, except that u1 in Example 1 was changed to 0.50 parts by weight (0.50% by weight relative to the total weight of the polymerizable composition part) of octyl=3-[3-t-butyl-5-(5-chloro-2H-benzotriazol-2-yl)-4-hydroxyphenyl]propionate (see formula (1-2) above, Eversorb109 manufactured by EverLight Chemical Industrial Corporation, hereinafter, this may be referred to as "u2").

As Reference Example 7, a plano lens having a thickness of 2 mm was produced by the same method as that in Example 1, except that 0.62 parts by weight (0.62% by weight relative to the total weight of the polymerizable composition part) of u2 was used instead of u1 in Example 1.

As Comparative Example 1, a plano lens having a thickness of 2 mm was produced by the same method as that in Example 1, except that u1 in Example 1 was changed to 0.60 parts by weight (0.60% by weight relative to the total weight of the polymerizable composition part) of 2-(4-butoxy-2-hydroxyphenyl)-2H-benzotriazole (see formula (4) below and BACKGROUND ART, Dainsorb T-53 manufactured by Daiwa Fine Chemicals Co., Ltd., hereinafter, this may be referred to as "u3").

[Chem. 8]

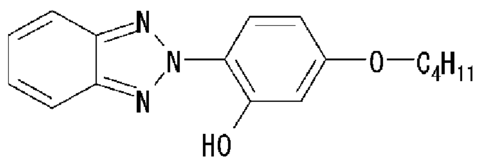

(4)

Characteristics (here, HEV cut rate, YI value, appearance) of a resin composition and a resin cured product (plano lens) of each of Examples 1 to 7 and Comparative Example 1 are shown in [Table 1] below.

[Table 1]

| | Resin composition | | | | Resin cured product | | |
|---|---|---|---|---|---|---|---|
| | Resin monomer | Resin monomer ratio (weight ratio) | Ultraviolet absorber | Addition amount of ultraviolet absorber relative to 100 parts by weight of resin monomer (parts by weight) | HEV cut rate (%) | YI value | Resin appearance |
| Example 1 | a1, b1 | 50.4 : 49.6 | u1 | 0.15 | 61.54 | 3.2 | No abnormality |
| Example 2 | a1, b1 | 50.4 : 49.6 | u1 | 0.50 | 85.02 | 5.7 | No abnormality |
| Example 3 | a1, b1 | 50.4 : 49.6 | u1 | 1.10 | 94.73 | 8.7 | No abnormality |
| Example 4 | a1, b1 | 50.4 : 49.6 | u1 | 1.30 | 96.02 | 9.4 | No abnormality |

(continued)

| | Resin composition | | | | Resin cured product | | |
|---|---|---|---|---|---|---|---|
| | Resin monomer | Resin monomer ratio (weight ratio) | Ultraviolet absorber | Addition amount of ultraviolet absorber relative to 100 parts by weight of resin monomer (parts by weight) | HEV cut rate (%) | YI value | Resin appearance |
| Reference Example 5 | a1, b1 | 50.4 : 49.6 | u1 | 1.50 | - | - | Precipitation of ultraviolet absorber observed |
| Reference Example 6 | a1, b1 | 50.4 : 49.6 | u2 | 0.50 | 80.92 | 5.2 | No abnormality |
| Reference Example 7 | a1, b1 | 50.4 : 49.6 | u2 | 0.62 | - | - | Precipitation of ultraviolet absorber observed |
| Comparative Example 1 | a1, b1 | 50.4 : 49.6 | u3 | 0.60 | 43.29 | 2.2 | No abnormality |

HEV cut rate (%) :
100 - (average of transmittance from 420 nm to 400 nm)
a1: m-xylene diisocyanate
b1: polythiol composition having 4,8-bis(mercaptomethyl)-3,6,9-trithio-1,11-undecanedithiol, 4,7-bis(mercaptomethyl)-3,6,9-trithio-1,11-undecanedithiol, and 5,7-bis(mercaptomethyl)-3,6,9-trithio-1,11-undecanedithiol as main components
u1: methyl=3-[3-t-butyl-5-(5-chloro-2H-benzotriazol-2-yl)-4-hydroxyphenyl]propionate
u2: octyl=3-[3-t-butyl-5-(5-chloro-2H-benzotriazol-2-yl)-4-hydroxyphenyl]propionate
u3: 2-(4-butoxy-2-hydroxyphenyl)-2H-benzotriazole

First, with respect to the appearance of the plano lens, in Reference Example 5 in which 1.50% by weight of the ultraviolet absorber u1 was added, a very small amount of precipitation of u1 was observed. Therefore, it is preferable that, with respect to 100 parts by weight of compositions of the lens base material other than u1 of Examples 1 to 5, u1 is added by less than 1.50 parts by weight.

In Reference Example 7 in which 0.62% by weight of the ultraviolet absorber u2 was added, a very small amount of precipitation of u2 was observed. Therefore, it is preferable that, with respect to 100 parts by weight of compositions of the lens base material other than u2 in Examples 6 and 7, u2 is added by less than 0.62 parts by weight.

Next, with respect to the HEV cut rate, i.e., 100-(average transmittance in a wavelength range of not less than 400 nm and not greater than 420 nm) [%], in a case where the ultraviolet absorber is u1, as shown in FIG. 1, when compared with Comparative Example 1 in which the ultraviolet absorber is u3, the rising point of the transmittance distribution curve is shifted to the long wavelength side (420 nm side), i.e., from 394 nm (Comparative Example 1) to about 396, 404, 410, and 410 nm (Examples 1 to 4, respectively). The point at which the transmittance becomes 80% is shifted to the long wavelength side, i.e., from 416 nm (Comparative Example 1) to about 422, 430, 434, and 436 nm (Examples 1 to 4, respectively). As shown in the HEV cut rate column in [Table 1], the HEV cut rate is significantly increased, i.e., 61.54 to 96.02% (Examples 1 to 4, the addition amount of u1 is 0.15 to 1.30 parts by weight), relative to 43.29% (Comparative Example 1, the addition amount of u3 is 0.60 parts by weight).

In particular, in Examples 3 and 4, the HEV cut rate is not less than 94%, which is very high, and thus, Examples 3 and 4 have excellent eye protection ability.

It should be noted that in each of Examples 1 to 4 and Comparative Example 1, the transmittance (about 88%) at a wavelength of 450 nm is maintained up to a wavelength of at least 800 nm.

The YI value is represented, according to the formula below, by using tri-stimulus values X, Y, Z of a test sample in the standard illuminant in the XYZ color system.

$$YI=100(1.2769X-1.059Z)/Y$$

When the YI value is negative, the tint becomes more bluish. When the YI value is positive, the tint becomes more yellowish, and the magnitude of the positive indicates the degree of yellowishness (yellowness). The XYZ color system is adopted as a standard color system by the CIE (International Commission on Illumination), and is a system based on red, green, and blue that are the three primary colors of light, or an additive mixture thereof. A colorimeter for obtaining the stimulus values X, Y, Z in the XYZ color system is publicly known, and multiplication, of spectral energy of light to be measured, by a color-matching function for each of the stimulus values X, Y, Z for each wavelength, is performed and the results of the multiplication over all the wavelengths in a visible region are accumulated, to obtain the stimulus values X, Y, Z.

The YI values of Examples 1 to 4 are 3.2 to 9.4 in order, whereas the YI value of Comparative Example 1 is 2.2.

It should be noted that the transmittance distribution, the HEV cut rate, and the YI value in Reference Example 5 have not been measured but are similar to those in Example 4.

Meanwhile, in a case where the ultraviolet absorber is u2, as shown in FIG. 2, when compared with Comparative Example 1 in which the ultraviolet absorber is u3, the rising point of the transmittance distribution curve is shifted to the long wavelength side (420 nm side), i.e., from 394 nm (Comparative Example 1) to about 402 nm (Reference Example 6). The point at which the transmittance becomes 80% is shifted to the long wavelength side, i.e., from 416 nm (Comparative Example 1) to about 429 nm (Reference Example 6). As shown in the HEV cut rate column in [Table 1], the HEV cut rate is significantly increased, i.e., 80.92% (Reference Example 6, the addition amount of u2 is 0.50 parts by weight), relative to 43.29% (Comparative Example 1, the addition amount of u3 is 0.60 parts by weight). In Reference Example 6 as well, the transmittance (about 88%) at a wavelength of 450 nm is maintained up to a wavelength of at least 800 nm.

The YI value is 5.2 (Reference Example 6), whereas the YI value in Comparative Example 1 is 2.2.

It should be noted that the transmittance distribution, the HEV cut rate, and the YI value in Reference Example 7 have not been measured but are similar to those in Reference Example 6.

As shown in each of Examples 1 to 7 described above, when a plastic lens includes a plastic lens base material obtained as a result of curing of a polymerizable compound having mixed therein a benzotriazole compound represented by general formula (1) above, and the polymerizable compound contains a combination of a xylene diisocyanate (m-xylene diisocyanate) and a polythiol (bis(mercaptomethyl)-3,6,9-trithio-1,11-undecanedithiol), the plastic lens and spectacles using the plastic lens have a high HEV cut rate and excellent eye protection ability.

In particular, in Examples 3 and 4 described above, the HEV cut rate is not less than 94%, which is very high.

In addition, in Examples 1 to 4 described above, the ultraviolet absorber (formula (1-1) above) in which R in general formula (1) is represented by an alkyl group having 1 carbon atom is at a proportion of less than 1.50 parts by weight relative to 100 parts by weight of the polymerizable compound. Accordingly, precipitation of the ultraviolet absorber is prevented, and the appearances of the plastic lens and spectacles using the plastic lens become preferable.

Further, in Reference Example 6 described above, the ultraviolet absorber (formula (1-2) above) in which R in general formula (1) is represented by an alkyl group having 8 carbon atoms is at a proportion of less than 0.62 parts by weight relative to 100 parts by weight of the polymerizable compound. Accordingly, precipitation of the ultraviolet absorber is prevented, and the appearances of the plastic lens and spectacles using the plastic lens become preferable.

As Example 8, 0.15 parts by weight of u1 in Example 1, 0.012 parts by weight of dibutyltin dichloride, and 0.085 parts by weight of the internal mold release agent were blended with a total of 100 parts by weight composed of 52.0 parts by weight of a1 in Example 1 and 48.0 parts by weight of 1,2-bis(2-mercaptoethylthio)-3-mercaptopropane (see formula (5) below, MR-7B manufactured by Mitsui Chemicals, Inc., hereinafter, this may be referred to as "b2"). The resultant mixture was stirred to be dissolved. This liquid preparation was subjected to degassing and stirring under 10 mmHg for 60 minutes, and then, was poured into a plano lens glass mold having a center thickness of 2 mm. The glass mold was subjected to curing for 19 hours while the temperature was increased from 20°C to 140°C, and then, was cooled to room temperature, whereby a plano lens having a thickness of 2 mm was produced.

As Example 9, a plano lens having a thickness of 2 mm was produced by the same method as that in Example 8, except that the amount of u1 in Example 8 was changed to 1.10 parts by weight (1.10% by weight relative to the total weight of the polymerizable composition part).

[Chem. 9]

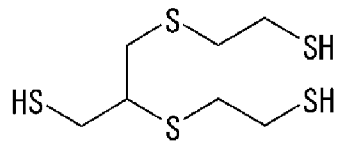

(5)

As Comparative Example 2, a plano lens having a thickness of 2 mm was produced by the same method as that in Example 8, except that 0.60 parts by weight (0.60% by weight relative to the total weight of the polymerizable composition part) of u3 (see Comparative Example 1) was used instead of u1 in Example 8.

Characteristics of a resin composition and a resin cured product (plano lens) of each of Examples 8 and 9 and Comparative Example 2 are shown in [Table 2] below.

[Table 2]

| | Resin composition | | | | Resin cured product | | |
|---|---|---|---|---|---|---|---|
| | Resin monomer | Resin monomer ratio (weight ratio) | Ultraviolet absorber | Addition amount of ultraviolet absorber relative to 100 parts by weight of resin monomer (parts by weight) | HEV cut rate (%) | YI | Resin appearance |
| Example 8 | a1, b2 | 52.0 : 48.0 | u1 | 0.15 | 62.03 | 3.3 | No abnormality |
| Example 9 | a1, b2 | 52.0 : 48.0 | u1 | 1.10 | 94.15 | 8.5 | No abnormality |
| Comparative Example 2 | a1, b2 | 52.0 : 48.0 | u3 | 0.60 | 42.80 | 2.1 | No abnormality |

HEV cut rate (%) :
100 - (average of transmittance from 420 nm to 400 nm )
a1: m-xylene diisocyanate
b2: 1,2-bis(2-mercaptoethylthio)-3-mercaptopropane
u1: methyl=3-[3-t-butyl-5-(5-chloro-2H-benzotriazol-2-yl)-4-hydroxyphenyl]propionate
u3: 2-(4-butoxy-2-hydroxyphenyl)-2H-benzotriazole

First, with respect to the appearance of the plano lens, in Examples 8 and 9 and Comparative Example 2, abnormality such as precipitation of the ultraviolet absorber u1, u3 was not observed.

Next, with respect to the HEV cut rate, even in a case where the polythiol in the resin monomer is b2 (1,2-bis(2-mercaptoethylthio)-3-mercaptopropane), when the ultraviolet absorber is u1 (Examples 8 and 9), the HEV cut rates are significantly increased, i.e., 62.03 and 94.15% (the addition amounts of u1 are 0.15 and 1.10 parts by weight), relative to 42.80% (Comparative Example 2, the addition amount of u3 is 0.60 parts by weight), as shown in the HEV cut rate column in [Table 2].

That is, as shown in FIG. 3, in Example 9, when compared with Comparative Example 2 in which the ultraviolet absorber is u3, the rising point of the transmittance distribution curve is shifted to the long wavelength side (420 nm side), i.e., from 396 nm (Comparative Example 2) to about 406 nm (Example 9). It should be noted that the rising point in Example 8 is the same as that in Comparative Example 2. The point at which the transmittance of Examples 8 and 9 becomes 80% is shifted to the long wavelength side, i.e., from 416 nm (Comparative Example 2) to about 424 and 434 nm (Examples 8 and 9, respectively). According to these, the HEV cut rates of Examples 8 and 9 are significantly increased, relative to that in Comparative Example 2.

In particular, in Example 9, the HEV cut rate is not less than 94%, which is very high, and thus, Example 9 has excellent eye protection ability.

It should be noted that in each of Examples 8 and 9 and Comparative Example 2, the transmittance (about 88%) at a wavelength of 450 nm is maintained up to a wavelength of at least 800 nm.

The YI values of Examples 8 and 9 are 3.3 and 8.5, respectively, whereas the YI value of Comparative Example 2 is 2.1.

<<Summary and the like of Examples 8 and 9 and Comparative Example 2>>

As shown in each of Examples 8 and 9 described above, when a plastic lens includes a plastic lens base material obtained as a result of curing of a polymerizable compound having mixed therein a benzotriazole compound represented by general formula (1) above, and the polymerizable compound contains a combination of a xylene diisocyanate (m-xylene diisocyanate) and a polythiol (1,2-bis(2-mercaptoethylthio)-3-mercaptopropane), the plastic lens and spectacles using the plastic lens have a high HEV cut rate and excellent eye protection ability.

In particular, in Example 9 described above, the HEV cut rate is not less than 94%, which is very high.

In addition, in Examples 8 and 9 described above, the ultraviolet absorber (formula (1-1) above) in which R in general formula (1) is represented by an alkyl group having 1 carbon atom is at a proportion of less than 1.50 parts by weight relative to 100 parts by weight of the polymerizable compound. Accordingly, precipitation of the ultraviolet absorber is prevented, and the appearances of the plastic lens and spectacles using the plastic lens become preferable.

## Claims

1. A plastic lens comprising
a plastic lens base material obtained as a result of curing of a polymerizable compound having mixed therein a benzotriazole compound represented by general formula (1) below

[Chem. 1]

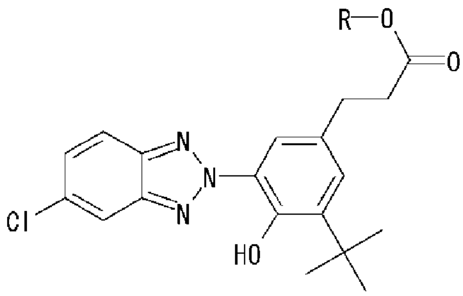

(1)

(in general formula (1), R represents an alkyl group having not less than 1 and not more than 8 carbon atoms) ,
wherein the polymerizable compound contains a combination of a xylene diisocyanate and a polythiol, and
the polythiol is at least one of bis(mercaptomethyl)-3,6,9-trithio-1,11-undecanedithiol and 1,2-bis(2-mercaptoethylthio)-3-mercaptopropane,.
wherein
the benzotriazole compound is a benzotriazole compound in which R in the general formula (1) is represented by an alkyl group having 1 carbon atom, and is at a proportion of less than 1.50 parts by weight relative to 100 parts by weight of the polymerizable compound.

2. The plastic lens according to claim 1, wherein
the xylene diisocyanate is m-xylene diisocyanate.

3. The plastic lens according to any one of claim 1 to 2, wherein
an HEV cut rate represented as 100-(average transmittance in a wavelength range of not less than 400 nm and not greater than 420 nm) is not less than 94%.

4. Use of the plastic lens according to any one of claims 1 to 3 in spectacles.

## Patentansprüche

1. Kunststofflinse, umfassend
ein Kunststofflinsengrundmaterial, erhalten als ein Ergebnis des Härtens einer polymerisierbaren Verbindung, in die eine Benzotriazolverbindung der nachstehenden allgemeinen Formel (1) eingemischt ist

[Chem. 1]

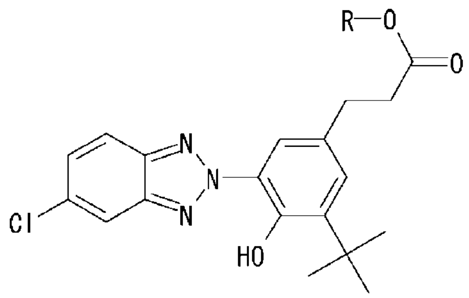

(1)

(in der allgemeinen Formel (1) stellt R eine Alkylgruppe mit nicht weniger als 1 und nicht mehr als 8 Kohlenstoffatomen dar), wobei die polymerisierbare Verbindung eine Kombination aus einem Xyloldiisocyanat und einem Polythiol enthält, und das Polythiol mindestens eines von Bis(mercaptomethyl)-3,6,9-trithio-1,11-undecandithiol und 1,2-Bis(2-mercaptoethylthio)-3-mercaptopropan ist,
wobei
die Benzotriazolverbindung eine Benzotriazolverbindung ist, in der R in der allgemeinen Formel (1) durch eine Alkylgruppe mit 1 Kohlenstoffatom dargestellt ist, und in einem Anteil von weniger als 1,50 Gewichtsteilen relativ zu 100 Gewichtsteilen der polymerisierbaren Verbindung vorliegt.

**2.** Kunststofflinse gemäß Anspruch 1, wobei
das Xyloldiisocyanat m-Xyloldiisocyanat ist.

**3.** Kunststofflinse gemäß einem der Ansprüche 1 bis 2, wobei
eine HEV-Schnittrate, dargestellt als 100-(durchschnittliche Durchlässigkeit in einem Wellenlängenbereich von nicht weniger als 400 nm und nicht mehr als 420 nm), nicht weniger als 94% beträgt.

**4.** Verwendung der Kunststofflinse gemäß einem der Ansprüche 1 bis 3 in einer Brille.

**Revendications**

**1.** Lentille en plastique comprenant
un matériau de base de lentille en plastique obtenu à la suite du durcissement d'un composé polymérisable dans lequel est mélangé un composé benzotriazole représenté par la formule générale (1) ci-dessous

[Chem. 1]

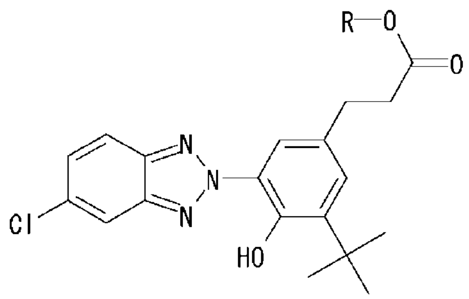

(1)

(dans la formule générale (1), R représente un groupe alkyle n'ayant pas moins de 1 et pas plus de 8 atomes de carbone), où le composé polymérisable contient une combinaison d'un diisocyanate de xylène et d'un polythiol, et le polythiol est au moins l'un parmi le bis(mercaptométhyl)-3,6,9-trithio-1,11-undécanedithiol et le 1,2-bis(2-mercaptoéthylthio)-3-mercaptopropane,
où
le composé benzotriazole est un composé benzotriazole dans lequel R dans la formule générale (1) est représenté par un groupe alkyle ayant 1 atome de carbone, et est dans une proportion de moins de 1,50 partie

en poids par rapport à 100 parties en poids du composé polymérisable.

**2.** Lentille en plastique selon la revendication 1, où
le diisocyanate de xylène est le diisocyanate de m-xylène.

**3.** Lentille en plastique selon l'une quelconque des revendications 1 à 2, où
un taux de coupure HEV représenté par 100 (transmittance moyenne dans une plage de longueurs d'onde non inférieure à 400 nm et non supérieure à 420 nm) n'est pas inférieur à 94 %.

**4.** Utilisation de la lentille en plastique selon l'une quelconque des revendications 1 à 3 dans des lunettes.

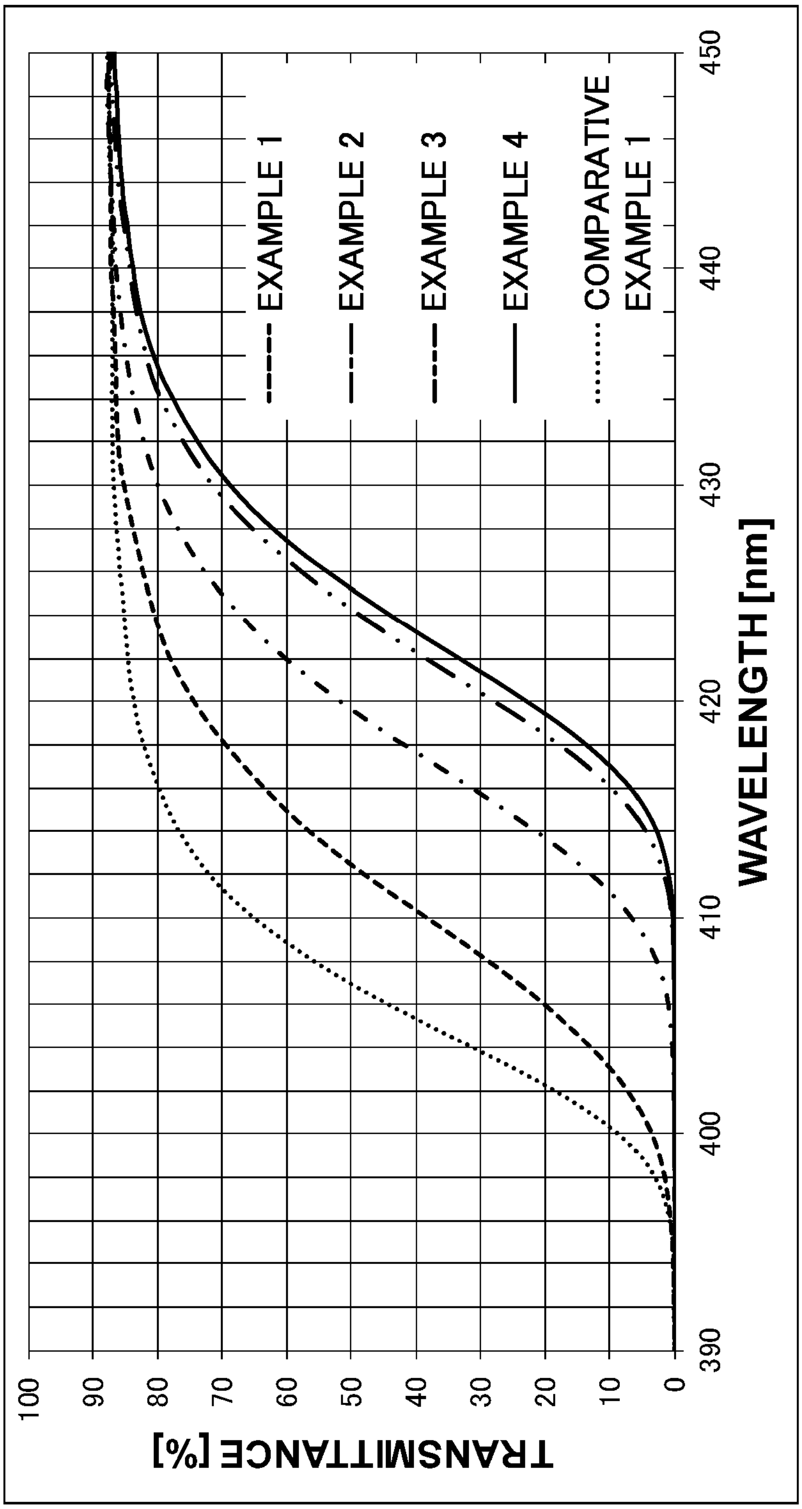

TRANSMITTANCE [%]
100
90
80
70
60
50
40
30
20
10
0
390
400
410
420
430
440
450
WAVELENGTH [nm]
EXAMPLE 1
EXAMPLE 2
EXAMPLE 3
EXAMPLE 4
COMPARATIVE EXAMPLE 1


FIG.1

FIG.2

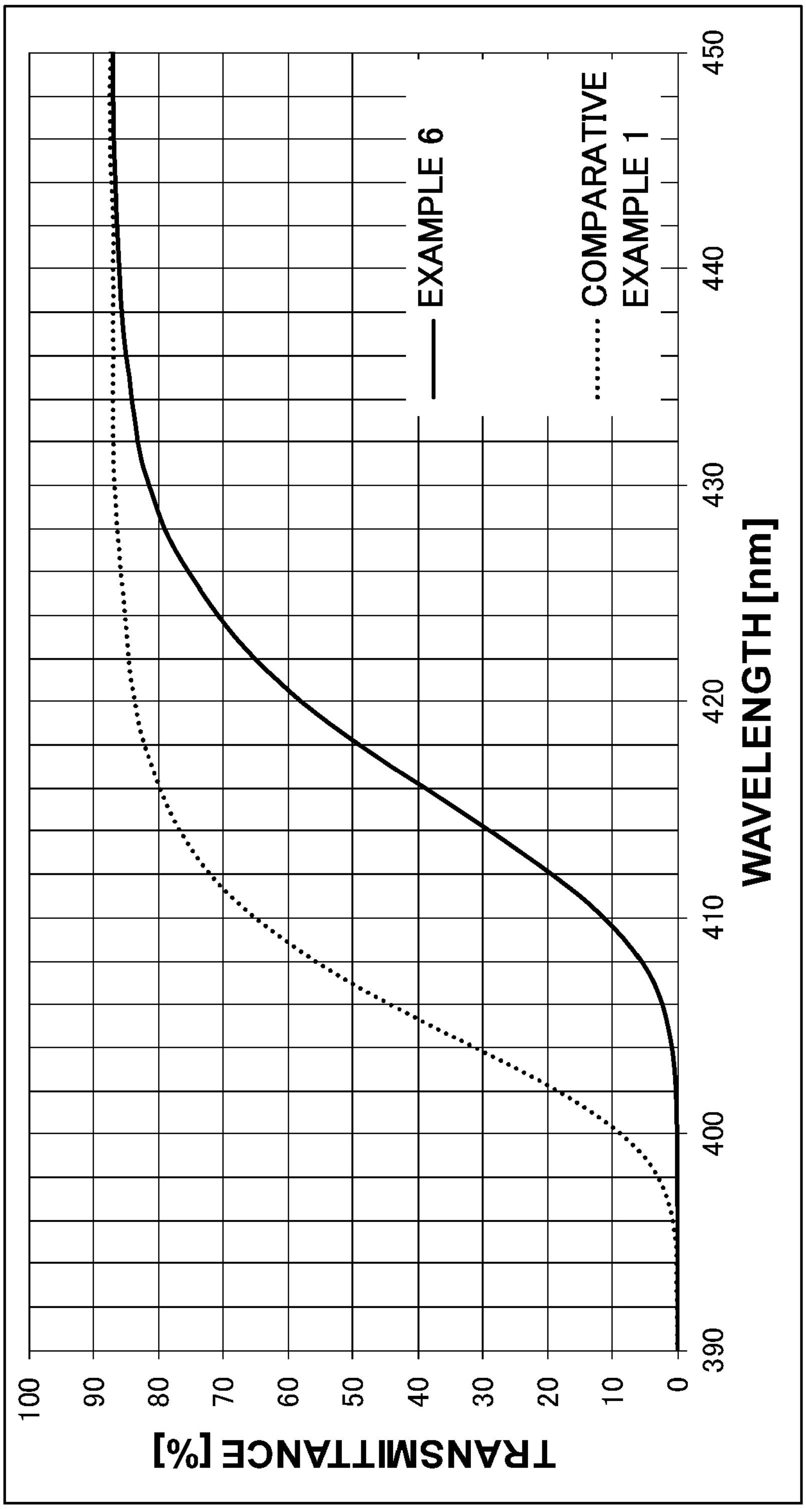
TRANSMITTANCE [%]
0
10
20
30
40
50
60
70
80
90
100
WAVELENGTH [nm]
390
400
410
420
430
440
450
EXAMPLE 6
COMPARATIVE EXAMPLE 1

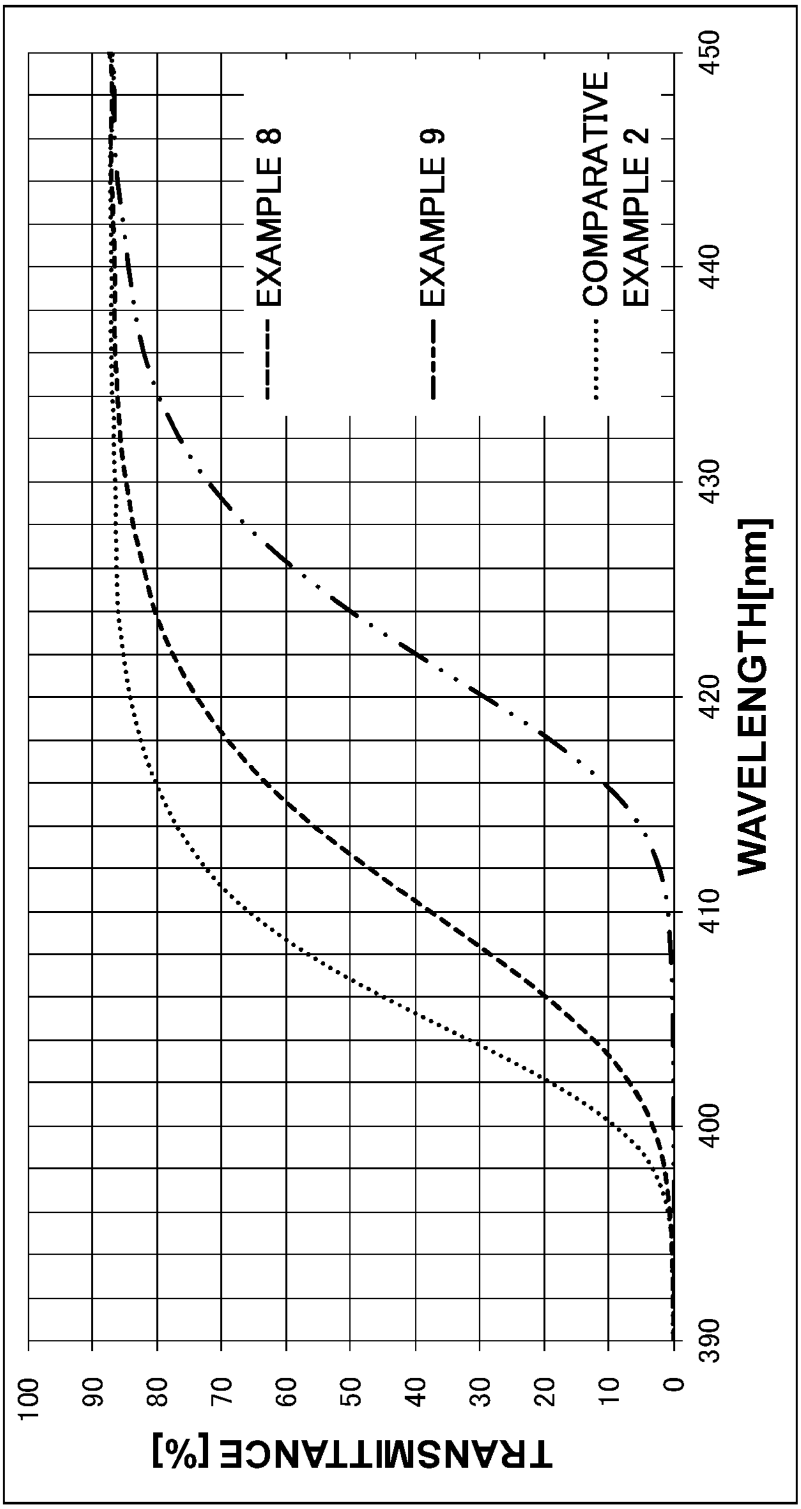
TRANSMITTANCE [%]
100
90
80
70
60
50
40
30
20
10
0
390
400
410
420
430
440
450
WAVELENGTH[nm]
EXAMPLE 8
EXAMPLE 9
COMPARATIVE EXAMPLE 2

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015034990 A
- US 2018340044 A1
- EP 3351593 A1
- CN 1108084385 A
- WO 2019022131 A1